# EUROPÄISCHE PATENTSCHRIFT

(11) **EP 4 321 765 B1**
(45) Veröffentlichungstag und Bekanntmachung des Hinweises auf die Patenterteilung: **15.01.2025**
(21) Anmeldenummer: 23187524.6
(22) Anmeldetag: 25.07.2023
(51) Int. Cl.: F16C 29/02, F16C 29/12

(54) **SCHLITTEN FÜR EIN LINEARES FÜHRUNGSSYSTEM UND LINEARES FÜHRUNGSSYSTEM MIT EINEM SOLCHEN SCHLITTEN**
CARRIAGE FOR A LINEAR GUIDANCE SYSTEM AND LINEAR GUIDANCE SYSTEM COMPRISING SUCH A CARRIAGE
CHARIOT POUR UN SYSTÈME DE GUIDAGE LINÉAIRE ET SYSTÈME DE GUIDAGE LINÉAIRE COMPRENANT UN TEL CHARIOT

(30) Priorität: 09.08.2022 DE 102022120080
(43) Veröffentlichungstag der Anmeldung: 14.02.2024
(73) Patentinhaber: Accuride International GmbH, 65582 Diez/Lahn (DE)
(72) Erfinder: Neuhaus, Christoph, 56412 Niederelbert (DE); Neidhöfer, Patrick, 56377 Seelbach (DE); Quirein, Thomas, 65582 DIEZ (DE)
(74) Vertreter: WSL Patentanwälte Partnerschaft mbB

(56) Entgegenhaltungen:
- WO-A1-2021/209301
- KR-B1- 102 024 135

## Beschreibung

Die vorliegende Erfindung betrifft einen Schlitten für ein lineares Führungssystem, wobei das lineare Führungssystem ein Schienenelement mit zwei zueinander hinzeigenden Laufflächen und den relativ gegenüber dem Schienenelement in und entgegen einer Auszugsrichtungen beweglichen Schlitten umfasst, wobei der Schlitten einen Grundkörper, ein erstes Paar von Stützelementen in Form von Gleitern und mindestens ein erstes Stützfederelement aufweist, wobei jeder der Gleiter aus dem ersten Paar von Stützelementen in einer Hochrichtung senkrecht zu der Auszugsrichtung beweglich an dem Grundkörper gelagert ist, sodass jeder der Gleiter mit jeweils einer der Laufflächen in Reibeingriff bringbar ist, und wobei das mindestens eine erste Stützfederelement derart an dem Grundkörper gelagert ist, dass das mindestens eine erste Stützfederelement die Gleiter des ersten Paares von Stützelementen in der Hochrichtung voneinander weg vorspannt.

Die vorliegende Erfindung betrifft zudem ein lineares Führungssystem mit einem derartigen Schlitten und einem Schienenelement, wobei das Schienenelement zwei zueinander hinzeigende Laufflächen aufweist, wobei der Schlitten und das Schienenelement in und entgegen der Auszugsrichtung linear gegeneinander verschiebbar sind, wobei jeder der Gleiter des ersten Paars von Stützelementen mit jeweils einer der Laufflächen in Reibeingriff ist.

Lineare Führungssysteme mit einem Schlitten und einem Schienenelement, wobei zwischen dem Schlitten und den Laufflächen des Schienenelements an dem Schlitten festgelegte Wälzkörper vorgesehen sind, sind aus dem Stand der Technik bekannt. Sie werden in unterschiedlichen Haushaltsgeräten, aber auch im Automobilbau und vielen weiteren Anwendungen eingesetzt. Um ein möglichst reibungsarmes Verschieben des Schlittens gegenüber dem Schienenelement zu ermöglichen, sind zwischen dem Schienenelement und dem Schlitten Wälzkörper angeordnet, wobei die Wälzkörper bei einer Relativbewegung des Schlittens und des Schienenelements auf der Oberfläche der Laufflächen des Schienenelements abrollen oder gegenüber der Oberfläche der Laufflächen eine Gleitbewegung ausführen. Die dabei entstehende Roll- und/oder Gleitreibung ist geringer als eine unmittelbare Gleitreibung zwischen dem Schlitten und dem Schienenelement. Allerdings ist es in einer solchen Konstruktion eines linearen Führungssystems schwierig, die zum Verschieben des Schlittens gegenüber dem Schienenelement notwendige Kraft präzise einzustellen. Zudem kann die Position des Schlittens relativ zu dem Schienenelement durch die Wälzkörper nicht präzise definiert werden.

Daher ist aus der WO 2021/209301 A1 ein modifizierter Schlitten für ein lineares Führungssystem der eingangs genannten Art sowie ein lineares Führungssystem mit einem derartigen Schlitten und einem Schienenelement bekannt.

Demgegenüber liegt der vorliegenden Erfindung die Aufgabe zugrunde, einen Schlitten für ein lineares Führungssystem bereitzustellen, der ein verringertes Spiel gegenüber dem Schienenelement aufweist.

Zur Lösung dieser Aufgabe wird ein Schlitten für ein lineares Führungssystem gemäß dem unabhängigen Anspruch 1 der vorliegenden Anmeldung vorgeschlagen. Dazu weist der Schlitten für ein lineares Führungssystem der eingangs genannten Art zusätzlich ein zweites Paar von Stützelementen und mindestens ein zweites Stützfederelement auf, wobei das zweite Paar von Stützelementen in der Auszugsrichtung von dem ersten Paar von Stützelementen beabstandet angeordnet ist, wobei jedes der Stützelemente aus dem zweiten Paar von Stützelementen in der Hochrichtung beweglich an dem Grundkörper gelagert ist, sodass jedes der Stützelemente mit jeweils einer der Laufflächen in Eingriff bringbar ist, und wobei das mindestens eine zweite Stützfederelement derart an dem Grundkörper gelagert ist, dass das mindestens eine zweite Stützfederelement die Stützelemente des zweiten Paares von Stützelementen in der Hochrichtung voneinander weg vorgespannt.

Die vorliegende Erfindung betrifft zunächst einmal einen derartigen Schlitten für ein lineares Führungssystem unabhängig von dem für das lineare Führungssystem notwendigen Schienenelement.

Es hat sich herausgestellt, dass lineare Führungssysteme mit Schlitten, die nur ein einziges, erstes Paar von Stützelementen, die auf die Laufflächen des Schienenelements hin vorgespannt sind, und beispielsweise eine Mehrzahl von drehbar gegenüber dem Grundkörper gelagerten Wälzkörpern, die auf den Laufflächen des Schienenelements abrollen, aufweisen, ein vergleichsweise großes Höhenspiel gegenüber dem Schienenelement haben. Als Höhenspiel im Sinne der vorliegenden Erfindung wird ein Spiel des Grundkörpers gegenüber dem Schienenelement verstanden und zwar in einer Hochrichtung des Schienenelements, d.h. senkrecht zu der Auszugsrichtung und im Wesentlichen parallel zum Schienenrücken des Schienenelements. Ein Höhenspiel führt bei Einleitung entsprechender Kräfte oder Momente zu einer Bewegung des Schlittens gegenüber dem Schienenelement. Ein solches Höhenspiel hat für den Anwender eines derartigen linearen Führungssystems akustische und haptische Nachteile.

Das zweite Paar von Stützelementen am erfindungsgemäßen Schlitten dient dem Spielausgleich entlang der Hochrichtung und gegebenenfalls als Drehmomentstütze zur Aufnahme von Drehmomenten, die auf den Schlitten einwirken und diesen um eine Drehachse senkrecht zum Schienenrücken drehen.

Gleiter, welche die Stützelemente des ersten Paars von Stützelementen und gegebenenfalls zumindest die Stützelemente des zweiten Paars von Stützelementen oder die Stützelemente des dritten Paars von Stützelementen bilden, sind Bauteile, die aufgrund ihrer geometrischen Ausgestaltung und/oder ihrer Montage bzw. Festlegung am Grundkörper auf den Laufflächen ausschließlich gleiten, aber nicht abrollen können. Als Beispiel für einen solchen Gleiter dient ein Bauteil mit einer zylindrischen Oberfläche, wobei die Zylinderachse im Wesentlichen in der Auszugsrichtung des Schlittens ausgerichtet ist. Es versteht sich, dass ein solches Bauteil auf der jeweiligen Lauffläche gleiten, aber nicht auf dieser abrollen kann.

In einer Ausführungsform der Erfindung bilden zumindest die beiden Gleiter des ersten Paars von Stützelementen und das erste Stützfederelement oder die beiden Stützelemente des zweiten Paars von Stützelementen und das zweite Stützfederelement oder die beiden Stützelemente des dritten Paars von Stützelementen und das dritte Stützfederelement jeweils eine funktionale Einheit, da genau ein erstes Stützfederelement bzw. genau ein zweites Stützfederelement bzw. genau ein drittes Stützfederelemente die beiden Gleiter bzw. Stützelemente eines Paars voneinander weg und damit auf die Laufflächen des Schienenelements hin vorspannt. Auf diese Weise wird eine definierte Reibkraft zwischen dem Schlitten, nämlich den an dem Schlitten vorgesehenen Stützelementen und dem Schienenelement bereitgestellt. Zudem positionieren in einer solchen Ausführungsform die beiden Stützelemente des jeweiligen Paars von Stützelementen den Schlitten.

In einer alternativen Ausführungsform der Erfindung sind zumindest die beiden Gleiter des ersten Paars von Stützelementen oder die Stützelemente des zweiten Paars von Stützelementen oder die Stützelemente des dritten Paars von Stützelementen jeweils mit einem eigenen ersten Stützfederelement bzw. zweiten Stützfederelement bzw. dritten Stützfederelement auf die jeweilige Lauffläche hin vorgespannt. In einer solchen Ausführungsform weist der Schlitten zumindest zwei erste Stützfederelemente oder zwei zweite Stützfederelemente oder zwei dritte Stützfederelemente auf, die sich an dem Schlitten oder aneinander abstützen.

In einer Ausführungsform der Erfindung sind das genau eine erste Stützfederelement und die beiden Gleiter des ersten Paars von Stützelementen in der Hochrichtung schwimmend an dem Grundkörper gelagert. Dies bedeutet, dass das genau eine erste Stützfederelement sich in der Hochrichtung ausschließlich an den beiden Gleitern abstützt, nicht aber an dem Grundkörper des Schlittens. Auf diese Weise ist die Federkraft, welche auf die beiden Gleiter ausgeübt wird, unabhängig von der exakten Position des Grundkörpers in der Hochrichtung. Insbesondere ist in einer Ausführungsform die auf die beiden Gleiter ausgeübte Federkraft gleich groß. Es versteht sich, dass eine solche schwimmende Lagerung auch für genau ein zweites Stützfederelement und die Stützelemente des zweiten Paars von Stützelementen sowie für genau ein zweites Stützfederelement und die Stützelemente des zweiten Paars von Stützelementen vorgesehen sein kann.

In einer Ausführungsform der Erfindung ist zumindest die von dem mindestens einen ersten Stützfederelement auf die Gleiter oder die von dem mindestens einen zweiten Stützfederelement auf die Stützelemente des zweiten Paars von Stützelementen oder die von dem mindestens einen dritten Stützfederelement auf die Stützelemente des dritten Paars von Stützelementen ausgeübte Federkraft einstellbar veränderbar. Eine solche Einstellbarkeit der Federkraft kann sowohl bei einer festen Lagerung des jeweiligen Stützfederelements an dem Grundkörper als auch bei einer gegenüber dem Grundkörper schwimmenden Lagerung des jeweiligen Stützfederelements realisiert sein. Eine Einstellbarkeit des Stützfederelements bedeutet, dass die Federkraft entweder bevor der Schlitten montiert wird oder dann, wenn der Schlitten bereits in dem Schienenelement montiert ist, variiert und eingestellt werden kann. In einer Ausführungsform der Erfindung ist die Einstellbarkeit der Federkraft dadurch realisiert, dass für einen gegebenen Abstand der beiden Laufflächen des Schienenelements der Abstand der Widerlager für das Stützfederelement an den beiden Stützelementen einstellbar ist. So kann der Bauraum, welcher für das Stützfederelement zwischen den beiden Stützelementen in der Hochrichtung zur Verfügung steht, eingestellt und die Federvorspannung der Stützelemente variiert werden.

In einer Ausführungsform der Erfindung ist zumindest das mindestens eine erste Stützfederelement oder das mindestens eine zweite Stützfederelement oder das mindestens eine dritte Stützfederelement eine Spiralfeder. Spiralfedern lassen sich einfach und kostengünstig herstellen und mit einer definierten Federkraft verbauen. Dabei stützt sich in einer Ausführungsform der Erfindung eine einzige Spiralfeder bei beiden Stützelementen des ersten Paars von Stützelementen ab und drückt diese voneinander weg auf die Laufflächen des Schienenelements hin. Zudem leitet in einer Ausführungsform der Erfindung das jeweilige Stützfederelement in der Hochrichtung keine Kräfte in den Grundkörper des Schlittens ein.

In einer Ausführungsform der Erfindung sind die beiden Gleiter eines Paars von Stützelementen aus Kunststoff, vorzugsweise durch Spritzgießen, hergestellt.

In einer Ausführungsform der Erfindung weist der Gleiter einen T-förmigen Abschnitt auf, wobei der Querbalken der T-Form denjenigen Teil des Gleiters bildet, welcher in Gleiteingriff mit der jeweiligen Lauffläche des Schienenelements kommt. Der vertikale Balken hingegen dient der Aufnahme des Stützfederelements. Handelt es sich bei dem Stützfederelement um eine Spiralfeder, so erstreckt sich der vertikale Balken in einer Ausführungsform in das Innere der Spiralfeder hinein.

In einer Ausführungsform weist der Gleiter mindestens einen, insbesondere aber genau zwei Führungsstifte auf. Ein solcher Führungsstift greift in jeweils eine Führungsbuchse in dem Grundkörper des Schlittens ein, sodass der Gleiter eine Führung in der Auszugsrichtungen erfährt, während er in der Hochrichtung schwimmend gelagert ist.

In einer Ausführungsform der Erfindung ist der Führungsstift zylindrisch und weist einen kreisförmigen Querschnitt auf. In einer Ausführungsform ist die Führungsbuchse zu dem Führungsstift komplementär als Hohlzylinder ausgestaltet.

Für die Realisierung des zweiten Paars von Stützelementen gibt es eine Vielzahl von Ausführungsformen.

In einer Ausführungsform weist der Schlitten neben dem ersten und dem zweiten Paar von Stützelementen auch ein drittes Paar von Stützelementen und mindestens ein drittes Stützfederelement auf. Jedes der Stützelemente des dritten Paars von Stützelementen ist in der Hochrichtung beweglich an den Grundkörper gelagert ist, sodass jedes der Stützelemente mit jeweils einer der Laufflächen in Eingriff bringbar ist. Das mindestens eine dritte Stützfederelement ist derart an dem Grundkörper gelagert, dass das mindestens eine dritte Stützfederelement die Stützelemente des dritten Paars von Stützelementen in der Hochrichtung voneinander weg vorgespannt. Dabei sind die Stützelemente des zweiten Paars von Stützelementen in der Auszugsrichtung vor den Gleitern des ersten Paars von Stützelementen angeordnet und die Stützelemente des dritten Paars von Stützelementen sind in der Auszugsrichtung hinter den Gleitern des ersten Paars von Stützelementen angeordnet.

In einer Ausführungsform der Erfindung sind die Stützelemente des zweiten Paars von Stützelementen und des dritten Paars von Stützelementen Wälzkörper, insbesondere Kugeln. Mit anderen Worten ausgedrückt, wird in einer solchen Ausführungsform eine Anordnung mit einem ersten Paar von Stützelementen in Form von Gleitern mit zwei Paaren von auf die Laufflächen des Schienenelements vorgespannten Wälzkörpern kombiniert. Ein Wälzkörper kann je nach Reibung zwischen dem Wälzkörper und der jeweiligen Lauffläche des Schienenelements eine Gleit- oder eine Rollbewegung oder eine kombinierte Gleit-/Rollbewegung gegenüber der Lauffläche ausführen.

Die Wälzkörper des zweiten und des dritten Paars von Stützelementen sind in einer Ausführungsform der Erfindung derart an dem Grundkörper aufgenommen, dass die Wälzkörper zumindest auf den zwei Laufflächen abrollbar sind oder gegenüber den zwei Laufflächen eine Gleitbewegung ausführen.

Unter einem Wälzkörper im Sinne der vorliegenden Anmeldung wird ein Rotationskörper verstanden, der als Element einer Führung die Reibung zwischen dem Schlitten und dem Schienenelement erheblich reduziert und damit eine Relativbewegung des Schlittens gegenüber dem Schienenelement erleichtert. Wälzkörper sind beispielsweise Kugeln, Rollen, Tonnen, Nadeln oder Kegel.

In einer alternativen Ausführungsform der Erfindung sind zumindest die Stützelemente des zweiten Paars von Stützelementen oder des dritten Paars von Stützelementen jeweils Gleiter. Dabei weisen in einer Ausführungsform der Erfindung die Gleiter jedes Paars von Stützelementen eine Erstreckung in der Auszugsrichtung auf, wobei die Erstreckung jedes Gleiters des zweiten Paars und des dritten Paars von Stützelementen in der Auszugsrichtung kleiner ist als die Erstreckung in der Auszugsrichtung jedes Gleiters des ersten Paars von Stützelementen. Eine solche Ausgestaltung kommt einer Ausgestaltung des zweiten und/oder dritten Paars von Stützelementen als Wälzkörper sehr nahe, wobei eine Rollbewegung der Gleiter auf den Laufflächen des Schienenelements ausgeschlossen ist.

In einer Ausführungsform der Erfindung legt der Grundkörper eine Position eines jeden Stützelements des zweiten und/oder dritten Paars von Stützelementen in der Auszugsrichtung relativ zu dem Grundkörper fest.

In einer Ausführungsform der Erfindung haben die Stützelemente des zweiten und des dritten Paars von Stützelementen den gleichen Abstand in der Auszugsrichtung von den Gleitern des ersten Paars von Stützelementen.

In einer Ausführungsform der Erfindung ist an dem Grundkörper für jedes der Stützelemente des zweiten Paars von Stützelementen und des dritten Paars von Stützelementen ein Anschlag vorgesehen, der einen Federweg der Stützelemente in einer Richtung senkrecht zu der Auszugsrichtung und entgegen einer Federkraft des zweiten und des dritten Stützfederelements begrenzt. Durch die Begrenzung des Federwegs der Stützelemente des zweiten Paars und des dritten Paars von Stützelementen wird eine erhöhte Stabilität des Schlittens gegen ein Nicken gegenüber dem Schienenelement erreicht. Gleichzeitig wird nach wie vor das Spiel ausgeglichen und durch die Federkraft der Stützfederelemente gedämpft.

In einer Ausführungsform der Erfindung weist der Schlitten genau ein erstes, ein zweites und ein drittes Paar von Stützelementen auf.

In einer Ausführungsform der Erfindung sind die Stützelemente des zweiten Paars von Stützelementen ebenso Gleiter wie die Stützelemente des ersten Paars von Stützelementen.

Es versteht sich, dass in einer solchen Ausführungsform die Gleiter des zweiten Paars von Stützelementen eine identische Ausgestaltung aufweisen wie die Gleiter des ersten Paars von Stützelementen oder aber eine von der Ausgestaltung des Gleiters des ersten Paars von Stützelementen abweichende Form. Eine Ausführungsform der Erfindung, bei der die Stützelemente des ersten Paars und die Stützelemente des zweiten Paars von Stützelementen im Wesentlichen identische Gleiter sind, wird auch als Tandemverbau bezeichnet.

In einer Ausführungsform der Erfindung weist dabei der Schlitten nur das erste Paar von federnd vorgespannten Stützelementen in Form von Gleitern und das zweite Paar von federnd vorgespannten Stützelementen in Form von Gleitern auf und keine weiteren federnd vorgespannten Stützelemente.

In einer Ausführungsform der Erfindung, bei welcher der Schlitten ein erstes Paar von Stützelementen in Form von Gleitern und ein zweites Paar von Stützelementen in Form von Gleitern aufweist, weist der Schlitten in einer weiteren Ausführungsform zusätzlich eine Mehrzahl von Wälzkörpern auf, wobei die Mehrzahl von Wälzkörpern derart an dem Grundkörper aufgenommen ist, dass die Mehrzahl von Wälzkörpern zumindest auf den zwei Laufflächen abrollbar sind oder gegenüber den zwei Laufflächen eine Gleitbewegung ausführen und dass die Mehrzahl von Wälzkörpern in der Auszugsrichtung von dem ersten und dem zweiten Paar von Stützelementen beabstandet ist, und wobei der Grundkörper eine Position eines jeden aus der Mehrzahl von Wälzkörpern in einer Auszugsrichtung relativ zu dem Grundkörper festlegt. Dabei sind in einer Ausführungsform die Wälzkörper nicht federnd voneinander weg bzw. auf die Laufflächen des Schienenelements vorgespannt.

In einer Ausführungsform der Erfindung sind die mit einer Lauffläche in Kontakt stehenden Gleiter des ersten Paars von Stützelementen und des zweiten Paars von Stützelementen in der Auszugsrichtung, vorzugsweise symmetrisch, zwischen zwei Wälzkörpern angeordnet. Sind in der Auszugsrichtung vor und hinter den Gleitern Wälzkörper vorgesehen, so erfüllen die Gleiter auch eine positionsstabilisierende Funktion im Hinblick auf die Positionierung des Grundkörpers des Schlittens relativ zu dem Schienenelement.

In einer Ausführungsform der Erfindung weist der Schlitten genau vier Wälzkörper auf, wobei die zwei Gleiter des ersten und des zweiten Paars von Stützelementen, die mit genau einer der Laufflächen des Schienenelements in Eingriff sind, zwischen zwei Wälzkörpern, die mit der gleichen Lauffläche in Eingriff sind, angeordnet sind.

In einer Ausführungsform sind die beiden Gleiter des ersten und des zweiten Paars von Stützelementen, die mit genau einer Lauffläche des Schienenelements in Eingriff sind, symmetrisch zwischen mindestens zwei Wälzkörpern, die mit der gleichen Lauffläche in Eingriff sind, angeordnet.

In einer Ausführungsform der Erfindung sind an dem Schlitten zusätzlich ein Rastkörper und eine Rastfeder vorgesehen, wobei die Rastfeder den Rastkörper in einer Richtung senkrecht zu der Auszugsrichtung und in der Hochrichtung oder senkrecht zu der Hochrichtung vorspannt. Ein solcher Rastkörper kommt mit einer Rastvertiefung oder einer Rastrampe, die an dem Schienenelement ausgebildet ist, in Eingriff und ermöglicht eine diskrete Positionierung bzw. Verrastung des Schlittens gegenüber dem Schienenelement.

In einer Ausführungsform der Erfindung ist der Rastkörper eine Rastkugel. In einer Ausführungsform der Erfindung hat eine solche Rastkugel einen kleineren Durchmesser als die Wälzkörper bzw. Kugeln, welche in einer Ausführungsform der Erfindung die Stützelemente des zweiten und des dritten Paars von Stützelementen bilden. In einer weiteren Ausführungsform ist die Rastfeder eine Spiralfeder.

In einer Ausführungsform der Erfindung stützt sich die Rastfeder an einem Gleiter des ersten Paars von Stützelementen ab. Eine solche Ausführungsform ist insbesondere dann sinnvoll, wenn die Gleiter des ersten Paars von Stützelementen symmetrisch in Bezug auf die Auszugsrichtung an dem Schlitten, d.h. in der Mitte des Schlittens, angeordnet sind. Dann kann der Rastkörper ebenfalls gleichzeitig in der Mitte des Schienenelements angeordnet sein, wenn er sich nur an dem Gleiter abstützt. Darüber hinaus ermöglicht die Integration der Rastkörpers und der Rastfeder in den Gleiter einen verringerten Aufwand bei der Systemintegration, d.h. der Montage der einzelnen Elemente am Schlitten. Es versteht sich, dass in einer solchen Ausführungsform der Rastkörper in einer Ausnehmung in dem jeweiligen Gleiter geführt ist.

In einer Ausführungsform der Erfindung sind die Rastfeder und das erste Stützfederelement als Spiralfedern ausgestaltet, wobei die Rastfeder und das erste Stützfederelement koaxial zueinander angeordnet sind, d.h. ihre Mittenachsen fallen zusammen.

Während die Realisierung einer Rastfunktion zuvor als Option für den erfindungsgemäßen Schlitten mit einem zweiten Paar von Stützelementen betrachtet wurde, bildet ein Schlitten mit einem Paar von Stützelementen in Form von Gleitern und einem Rastkörper und einer Rastfeder, so wie er nachfolgend im Detail beschrieben wird, auch eine eigenständige Erfindung, ohne dass der Schlitten mit einem weiteren Paar von Stützelementen ausgestaltet ist.

Die vorliegende Anmeldung betrifft daher unter einem weiteren Gesichtspunkt auch einen Schlitten für ein lineares Führungssystem, das ein Schienenelement mit zwei zueinander hin zeigenden Laufflächen und den relativ gegenüber dem Schienenelement in und entgegen einer Auszugsrichtung beweglichen Schlitten umfasst, wobei der Schlitten einen Grundkörper, genau ein Paar von Stützelementen, wobei das Paar von Stützelemente in Form von Gleitern ausgestaltet ist, und mindestens ein Stützfederelement aufweist, wobei jeder der Gleiter aus dem Paar von Stützelementen in einer Hochrichtung senkrecht zu der Auszugsrichtung beweglich an dem Grundkörper gelagert ist, so dass jeder der Gleiter mit jeweils einer der Laufflächen in Reibeingriff bringbar ist, und wobei das mindestens eine Stützfederelement derart an dem Grundkörper gelagert ist, dass das mindestens eine Stützfederelement die Gleiter des Paars von Stützelementen in der Hochrichtung voneinander weg vorspannt, wobei an dem Schlitten zusätzlich ein Rastkörper und eine Rastfeder vorgesehen sind, wobei die Rastfeder den Rastkörper in einer Richtung senkrecht zu der Auszugsrichtung und in der Hochrichtung oder senkrecht zu der Hochrichtung vorspannt. Ein solcher Rastkörper kommt mit einer Rastvertiefung oder einer Rastrampe, die an dem Schienenelement ausgebildet ist, in Eingriff und ermöglicht eine diskrete Positionierung bzw. Verrastung des Schlittens gegenüber dem Schienenelement.

In einer Ausführungsform der Erfindung ist der Rastkörper eine Rastkugel. In einer Ausführungsform der Erfindung hat eine solche Rastkugel einen kleineren Durchmesser als die Wälzkörper bzw. Kugeln, die zusätzlich zu den Gleitern an dem Grundkörper angeordnet sind und auf den Laufflächen des Schienenelements abrollen, ohne federnd auf die Laufflächen vorgespannt zu sein. In einer weiteren Ausführungsform ist die Rastfeder eine Spiralfeder.

In einer Ausführungsform dieser zweiten Erfindung stützt sich die Rastfeder an einem Gleiter des Paars von Stützelementen ab. Eine solche Ausführungsform ist insbesondere dann sinnvoll, wenn die Gleiter des Paars von Stützelementen symmetrisch in Bezug auf die Auszugsrichtung an dem Schlitten, d.h. in der Mitte des Schlittens, angeordnet sind. Dann kann der Rastkörper ebenfalls gleichzeitig in der Mitte des Schienenelements angeordnet sein, wenn er sich nur an dem Gleiter abstützt. Darüber hinaus ermöglicht die Integration der Rastkörpers und der Rastfeder in den Gleiter führt zudem zu einem verringerten Aufwand bei der Systemintegration, d.h. der Montage der einzelnen Elemente am Schlitten. Es versteht sich, dass in einer solchen Ausführungsform der Rastkörper in einer Ausnehmung in dem jeweiligen Gleiter geführt ist.

In einer Ausführungsform der zweiten Erfindung sind die Rastfeder und das Stützfederelement als Spiralfedern ausgestaltet, wobei die Rastfeder und das Stützfederelement koaxial zueinander angeordnet sind, d.h. ihre Mittenachsen fallen zusammen.

Der Grundkörper des Schlittens ist in einer Ausführungsform der Erfindung aus Metall oder aus Kunststoff hergestellt. Insbesondere eine Ausführungsform des Grundkörpers aus Kunststoff ermöglicht es, den Grundkörper kostengünstig, vorzugsweise in einem Stück (einstückig), beispielsweise durch Spritzgießen, in großen Stückzahlen zu fertigen. Zudem ermöglicht Kunststoff eine Gewichtsreduzierung.

An dem Grundkörper des Schlittens wird im eingebauten Zustand des linearen Führungssystems ein mobiles Bauelement, wie beispielsweise eine Schublade in einem Kraftfahrzeug, montiert. Dazu weist der Grundkörper in einer Ausführungsform mindestens eine Gewindebohrung oder ein Loch auf, in welchem ein Befestigungsmittel, beispielsweise eine Schrauben, zum Befestigen des mobilen Bauelements eingreift.

Der Grundkörper des Schlittens dient in einer Ausführungsform, welche Stützelemente in Form von Wälzkörpern oder auch zusätzliche, nicht federnd vorgespannte Wälzkörper aufweist, auch als Wälzkörperkäfig für die Wälzkörper, der die Positionen der Wälzkörper in der Auszugsrichtungen relativ zu dem Grundkörper festlegt.

Im Sinne der vorliegenden Anmeldung bezeichnet die Auszugsrichtung diejenige Richtung, in und entgegen der der Schlitten im eingebauten Zustand gegenüber dem Schienenelement linear verschiebbar ist.

Also Hochrichtung wird im Sinne der vorliegenden Anmeldung eine Richtung senkrecht zu der Auszugsrichtung verstanden, die sich im Wesentlichen parallel zu einem Schienenrücken des Schienenelements erstreckt. Mit anderen Worten ausgedrückt, ist die Hochrichtung parallel zur Federkraft, welche das mindestens eine erste Stützfederelement auf den Gleiter ausübt.

Die oben genannte Aufgabe wird auch durch ein lineares Führungssystem gelöst, das ein Schienenelement mit zwei zueinander hin zeigenden Laufflächen und einen Schlitten gemäß einer der Ausführungsformen, so wie sie zuvor beschrieben wurden, aufweist, wobei der Schlitten und das Schienenelement in und entgegen der Auszugsrichtung linear gegeneinander verschiebbar sind, und wobei jeder der Gleiter des ersten Paars von Stützelementen mit jeweils einer der Laufflächen in Reibeingriff ist und wobei jedes der Stützelemente des zweiten Paars von Stützelementen mit jeweils einer der Laufflächen in Eingriff ist.

In einer Ausführungsform der Erfindung ist das lineare Führungssystem ausgewählt aus einer Gruppe bestehend aus einer Auszugsführung, einer Teleskopschiene und einer Linearführung. Dabei umfasst der Oberbegriff lineares Führungssystem eine Gleitführung, eine Kugelführung und eine Rollenführung. Wenn im Sinne der vorliegenden Anmeldung von einem linearen Führungssystem die Rede ist, so ist dieser Begriff derart allgemein zu verstehen, dass nicht nur Linearführungen davon umfasst sind, bei welchen der Schlitten deutlich kürzer ist als das Schienenelement und sich der Schlitten nur innerhalb der Länge des Schienenelements bewegen lässt, sondern auch Linearführungen, bei welchen der Grundkörper des Schlittens so lang ist, dass er bei Erreichen zumindest einer Endlage über die Länge des Schienenelements übersteht und somit einen Teilauszug bildet.

Das erfindungsgemäße lineare Führungssystem selbst wiederum ist in einer Ausführungsform Bestandteil einer komplexeren linearen Führung. Dabei ist in einer Ausführungsform der Schlitten des linearen Führungssystems mit einem weiteren ersten Schienenelement einer Teleskopschiene verbunden, so dass der Schlitten gegenüber dem weiteren ersten Schienenelement keine Relativbewegung ausführen kann. Die Teleskopschiene weist in einer solchen Ausführungsform auch ein weiteres zweites Schienenelement auf, das relativ zu dem weiteren ersten Schienenelement verschieblich an dem weiteren ersten Schienenelement gelagert ist.

In einer Ausführungsform der Erfindung ist das Schienenelement zumindest abschnittsweise aus Metall, insbesondere aus Stahl oder Aluminium, oder aus Kunststoff hergestellt.

In einer Ausführungsform der Erfindung, bei der der Schlitten zusätzlich zu den Gleitern und Stützelementen oder zu den Gleitern alleine einen Rastkörper und eine Rastfeder aufweist, weist das Schienenelement, vorzugsweise in einer der zwei Laufflächen, eine Rastvertiefung auf, wobei die Rastvertiefung derart angeordnet ist, dass der Rastkörper oder ein Wälzkörper zumindest des zweiten oder des dritten Paars von Stützelementen in der Rastvertiefung verrastbar ist.

Weitere Vorteile, Merkmale und Anwendungsmöglichkeiten der vorliegenden Erfindung werden anhand der folgenden Beschreibung von Ausführungsformen und der dazugehörigen Figuren deutlich. In den Figuren sind gleiche Elemente mit gleichen Bezugszeichen bezeichnet.
- Figur 1: ist eine isometrische Darstellung einer ersten Ausführungsform eines erfindungsgemäßen Schlittens.
- Figur 2: ist eine teilweise transparente Seitenansicht des Schlittens aus Figur 1.
- Figur 3: ist eine Schnittansicht des Schlittens aus den Figuren 1 und 2.
- Figur 4: ist eine isometrische Darstellung einer Linearführung mit dem Schlitten aus den Figuren 1 bis 3 und einem Schienenelement.
- Figur 5: ist eine isometrische Darstellung einer weiteren Ausführungsform eines erfindungsgemäßen Schlittens.
- Figur 6: ist eine Seitenansicht des Schlittens aus Figur 5.
- Figur 7: ist eine Ansicht von unten auf den Schlitten aus den Figuren 5 und 6.
- Figur 8: ist eine isometrische Darstellung einer Linearführung mit dem Schlitten aus den Figuren 5 bis 7 und einem Schienenelement.
- Figur 9: ist eine isometrische Darstellung einer weiteren Ausführungsform eines erfindungsgemäßen Schlittens.
- Figur 10: ist eine Seitenansicht des Schlittens aus Figur 9.
- Figur 11: ist eine teilweise weggebrochene Schnittansicht durch eine Linearführung mit dem Schlitten aus den Figuren 9 und 10 und einem Schienenelement.
- Figur 12: ist eine isometrische Darstellung der Linearführung aus Figur 11.
- Figur 13: ist eine Schnittansicht durch einen weiteren Schlitten.
- Figur 14: ist eine vergrößerte, teilweise weggebrochene und teilweise geschnittene Ansicht einer Ausführungsform einer erfindungsgemäßen Linearführung.
- Figur 15: ist eine teilweise weggebrochene Schnittansicht durch eine Linearführung mit dem Schlitten aus den Figuren 1 bis 3 und einem alternativen Schienenelement.

Die in den Figuren dargestellten Schlitten 1 dienen der Realisierung einer Linearbewegung entlang eines linearen bzw. geraden Wegs in einem Schienenelement 30. Der jeweilige Schlitten 1 bildet zusammen mit dem Schienenelement 30 ein lineares Führungssystem in Form einer Linearführung 31.

Ein solches Schienenelement 30 einer Linearführung 31 weist im Allgemeinen einen Schienenrücken 32 auf, welcher zwei Schenkel 33 miteinander verbindet, wobei die Schenkel 33 die Laufflächen 34 des Schienenelements 30 tragen. Zu diesem Zweck sind die Schenkel 33 des Schienenelements 30 teilkreisförmig gebogen, sodass insgesamt ein in etwa C-förmiges Profil entsteht. Der Schlitten 1 wird innerhalb des C-förmigen Profils aufgenommen, wobei sich der Schlitten 1 dort mit den nachstehend detaillierter beschriebenen Stützelementen abstützt und so von den Laufflächen 34 des Schienenelements 30 geführt wird.

Jeder Schlitten 1 verfügt über einen Grundkörper 2, der als Träger für ein mobiles Bauteil, das an dem Grundkörper 2 befestigt wird, dient. Ein solches mobiles Bauteil ist beispielsweise eine Schublade, die gegenüber einem stationären, mit dem Schienenelement verbundenen Bauteil eine lineare Auszugsbewegung erfahren soll. Zu diesem Zweck weist der Grundkörper 2 des Schlittens Befestigungsmittel, in den dargestellten Ausführungsformen Innengewinde 4, auf, die mit Schrauben verbindbar sind.

Die Grundkörper 2 der Schlitten 1 weisen jeweils konvex gekrümmte Führungsflächen 3 auf. Diese Führungsflächen 3 sind im Wesentlichen komplementär zu den Laufflächen des jeweiligen Schienenelements ausgestaltet und zeigen daher auf den beiden Seitenflächen des jeweiligen Schlittens 1 voneinander weg. Die Führungsflächen 3 des Grundkörpers 2 dienen jedoch nur als Notlaufflächen für den Fall, dass die übrigen für die Führung des jeweiligen Schlittens an dem Grundkörper 2 vorgesehenen Elemente über ein vorgesehenes Maß hinaus belastet werden. Daher weisen die Führungsflächen 3 des Schlittens 2 im eingebauten Zustand des Schlittens ein Spiel gegenüber den Laufflächen 34 des jeweiligen Schienenelements 30 auf.

Die eigentliche Führung der Schlitten 1 wird von einer Mehrzahl von Stützelementen bereitgestellt, die federnd auf die Laufflächen 34 des jeweiligen Schienenelements 30 vorgespannt sind. Diese Stützelemente sind immer paarweise derart angeordnet, dass ein erstes Stützelement eines Paares zu einer ersten Lauffläche 34 des Schienenelements 30 hin zeigt und auf diese vorgespannt ist und ein zweites Stützelement des gleichen Paars auf die zweite Lauffläche 34 des gleichen Schienenelements 30 vorgespannt ist. Anders ausgedrückt sind die Stützelemente eines jeden Paars von Stützelementen voneinander weg in der Hochrichtung 12 der Linearführung vorgespannt.

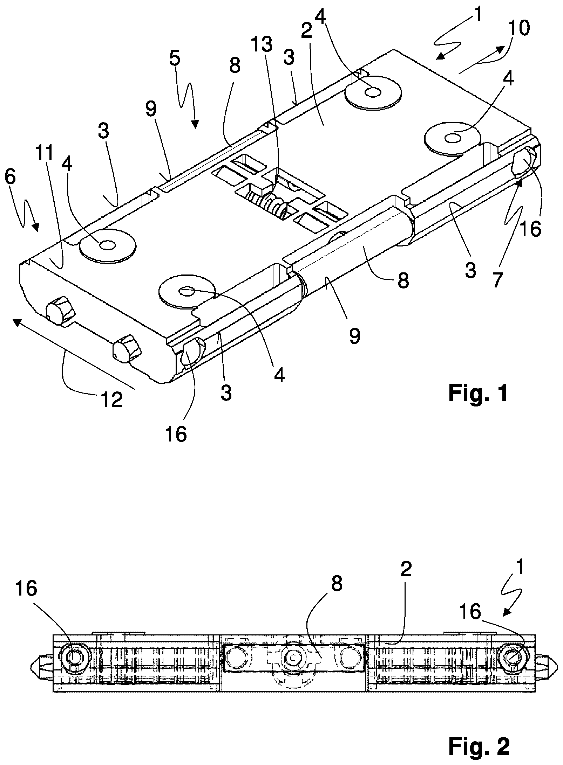

Die erste Ausführungsform des Schlittens 1 gemäß den Darstellungen der Figuren 1 bis 4 weist drei Paare 5, 6, 7 von Stützelementen auf. Das erste Paar von Stützelementen 5 wird von zwei Gleitern 8 gebildet. Diese Gleiter 8 weisen im Wesentlichen teilzylindrische Gleitflächen 9 auf, welche in Reibeingriff mit den Laufflächen 34 des jeweiligen Schienenelements 30 sind. Die Gleiter 8 können sowohl aufgrund der geometrischen Ausgestaltung ihrer Gleitflächen 9 (diese haben eine zu den Laufflächen des Schienenelements komplementäre Form) als auch aufgrund ihrer Montage bzw. Festlegung an dem Grundkörper 2 ausschließlich eine Gleitbewegung entlang der Laufflächen 34 des Schienenelements 30 ausführen. Eine Rollbewegung oder eine kombinierte Roll-/Gleitbewegung ist ausgeschlossen.

Die Schlitten 1 sind für eine Linearbewegung in und entgegen einer Auszugsrichtung 10 an dem jeweiligen Schienenelement vorgesehen. Die Richtung senkrecht zu der Auszugsrichtung 10 und im Wesentlichen parallel zum Schienenrücken 32 des Schienenelements 30 bzw. parallel zu der in den Figuren dargestellten Oberfläche 11 des Grundkörpers 2 wird als Hochrichtung 12 des Schlittens 1 bzw. des Schienenelements 30 oder der Linearführung 31 als Ganzes bezeichnet.

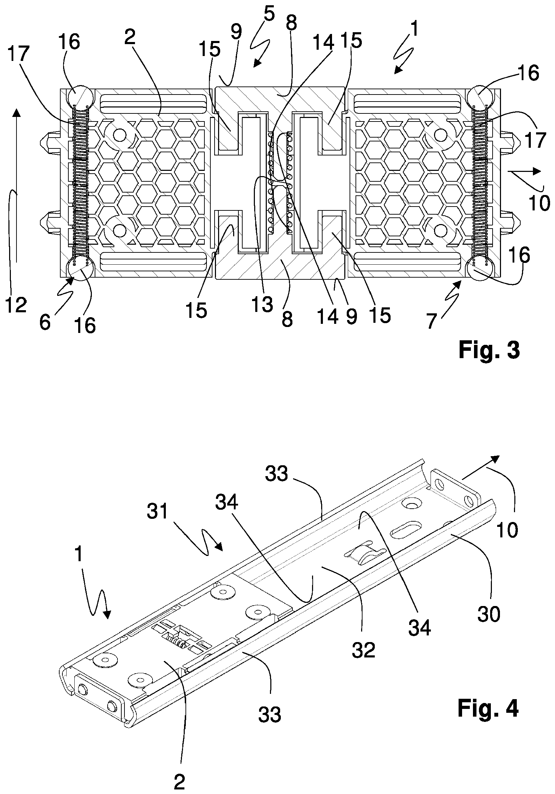

Wie aus den Figuren 2 und 3 erkennbar ist, sind die Gleiter 8 in der Hochrichtung 12 schwimmend an dem Grundkörper 2 gelagert. D.h. die Gleiter 8 können sich in der Hochrichtung 12 frei gegenüber dem Grundkörper 2 bewegen. Dabei sind die beiden Gleiter 8 mit einer einzigen Spiralfeder 13 voneinander weg und auf die Laufflächen des Schienenelements vorgespannt. Die Spiralfeder 13 bildet das erste Stützfederelement im Sinne der vorliegenden Anmeldung. Auch die Spiralfeder 13 ist schwimmend an dem Grundkörper 2 gelagert und stützt sich ausschließlich auf entsprechenden Lagerflächen 14 der beiden Gleiter 8 ab.

Während die Gleiter 8 in der Hochrichtung 12 frei beweglich gegenüber dem Grundkörper 2 gelagert sind, ist die Lagerung in den anderen Richtungen so ausgestaltet, dass die Gleiter 8 eine Stütze bilden. Jeder der beiden Gleiter 8 verfügt zu diesem Zweck über zwei zylindrische Führungsstifte 15, die in hohlzylindrischen Führungsbuchsen an dem Grundkörper 2 geführt sind.

Abgesehen von den Führungsstiften 15 weist jeder der Gleiter 8 eine T-förmige Grundform auf, wobei der Querbalken des "T" die Gleitfläche 9 trägt, während der senkrechte Teil des "T" in die Spiralfeder 13 eingreift und diese führt.

Die beiden Gleiter 8 sind bezogen auf die Auszugsrichtung 10 in der Mitte des Grundkörpers 2 und symmetrisch an dem Grundkörper 2 angeordnet.

Es hat sich herausgestellt, dass die beiden federnd auf die Laufflächen 34 des Schienenelements 30 vorgespannten Gleiter 8 nicht in allen Fällen eine hinreichende Stabilität für die Führung des Grundkörpers 2 des Schlittens 1 bieten. Der Schlitten 1 hat insbesondere bei größerer Dimensionierung ein Spiel, das sich für einen Benutzer haptisch und akustisch auswirkt.

Daher sind bei dem Schlitten 1 aus den Figuren 1 bis 4 ein zweites Paar 6 von Stützelementen und ein drittes Paar 7 von Stützelementen vorgesehen. In der dargestellten Ausführungsform werden die Stützelemente des zweiten und des dritten Paares 6, 7 von Stützelementen von Wälzkörpern in Form von Lagerkugeln 16 gebildet. Die Lagerkugeln 16 sind in der Auszugsrichtung 10 symmetrisch vor und hinter den Gleitern 8 des ersten Paars 5 von Stützelementen angeordnet. Die Lagerkugeln 16 sind jeweils mittels einer an dem Grundkörper 2 aufgenommenen Spiralfeder 17 (zweites und drittes Stützfederelement) voneinander weg und auf die Laufflächen des Schienenelements hin vorgespannt. Diese vorgespannten Lagerkugeln 16 nehmen auf den Grundkörper 2 einwirkende Kräfte und Momente auf bzw. tragen diese über die Spiralfeder 17 ab.

In der Ausführungsform der Figuren 1 bis 4 sind die Spiralfedern 17 des zweiten und des dritten Paars 6, 7 von Stützelementen nicht schwimmend im Grundkörper 2 verlegt, sondern weisen eine hohe Reibkraft gegenüber dem Grundkörper 2 auf. Daher überträgt der Grundkörper 2 die auf ihn einwirkenden Kräfte und Momente über die jeweilige Spiralfeder 17 auf die Kugeln 16. Auf diese Weise dienen die Kugeln 16 und ihre Stützfederelemente 17 der Stützung des Grundkörpers 2 in dem Schienenelement 30.

Die Führung der Lagerkugeln 16 ist derart ausgestaltet, dass die Kugeln einen definierten Federweg in der Hochrichtung 12 beim Einfedern entgegen der Federkraft der Spiralfeder 17 haben. Diese Begrenzung des Federwegs aufgrund der Ausgestaltung der Kugelaufnahmen in dem Grundkörper 2 verhindert ein übermäßiges Nicken und Bewegen des Grundkörpers 2 gegenüber dem Schienenelement.

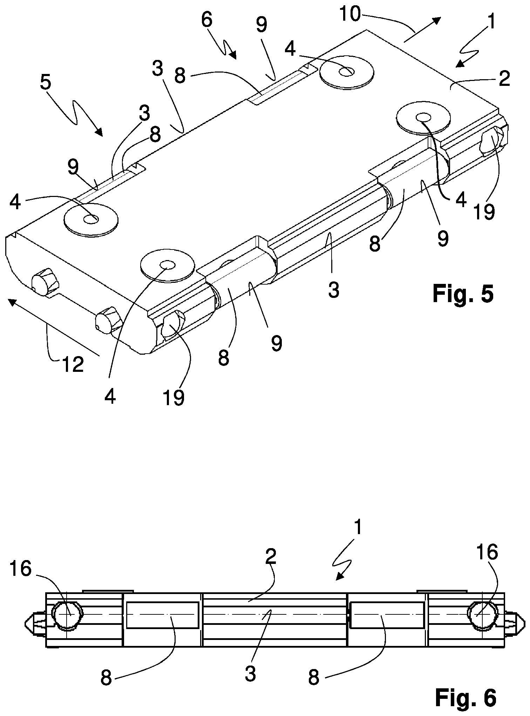

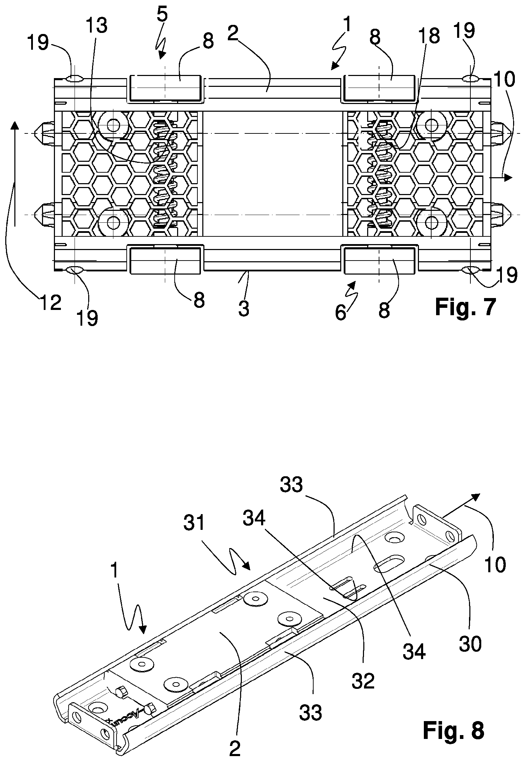

Gegenüber der Ausführungsform der Figuren 1 bis 4 ist das Stützprinzip des Schlittens 1 aus den Figuren 5 bis 8 in abgewandelter Weise realisiert. Der Schlitten 1 der Figuren 5 bis 8 weist ein erstes Paar 5 von Gleitern 8 als Stützelemente und ein zweites Paar 6 von Gleitern 8 als weiterer Stützelementen auf. Diese zwei Paare 5, 6 von Gleitern 8 sind in der Auszugsrichtung 10 beabstandet voneinander an dem Grundkörper 2 des Schlittens 1 montiert, wobei die Gleiter 8 sich in der Längsrichtung entlang der Auszugsrichtung 10 symmetrisch über den Grundkörper 2 verteilen. Wie zuvor für das erste Paar 5 von Stützelementen der Ausführungsform aus den Figuren 1 bis 3 beschrieben, weisen auch die Gleiter 8 und ihre jeweiligen Stützfederelemente 13, 18 jeweils eine schwimmende Lagerung in der Hochrichtung 12 auf. Die Gleiter 8 der beiden Paare 5, 6 von Stützelementen sind alle identisch gestaltet.

Zusätzlich zu diesen beiden Paaren 5, 6 von Gleitern 8 trägt der Grundkörper 2 vier nicht federnd auf die Laufflächen vorgespannte Lagerkugeln 19 zur Verringerung der Gleitreibung im Falle einer Kraft- oder Momenteinleitung in den Schlittens 2, welche die Federkraft der ersten und zweiten Stützfederelemente 13, 18 übersteigt.

Neben einer verbesserten Führung bzw. Lagerung des jeweiligen Schlittens 1 an dem Schienenelement ermöglicht es die erfindungsgemäße Ausgestaltung des Schlittens auch, eine zusätzliche Rastfunktion zu implementieren.

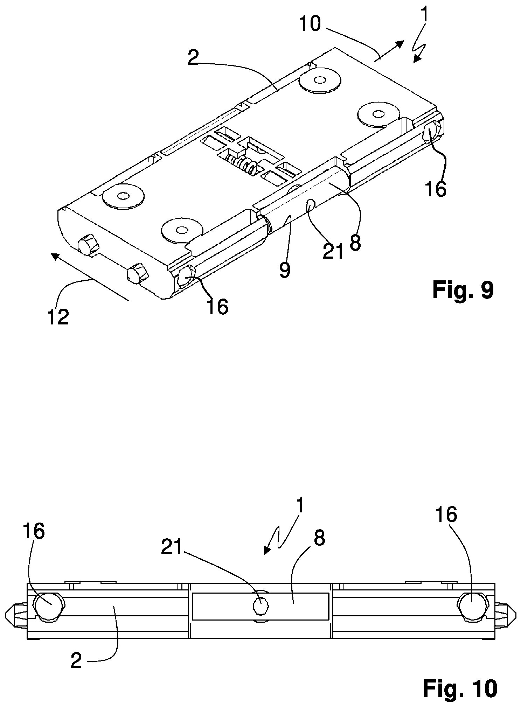

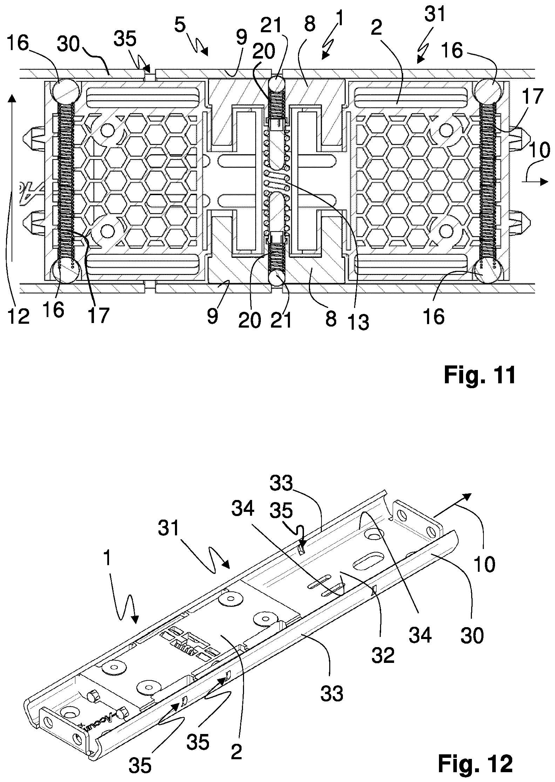

Bei der Ausführungsform des Schlittens 1 aus den Figuren 9 bis 12 ist eine solche Rastfunktion dadurch realisiert, dass an jedem Gleiter 8 aus dem ersten Paar 5 von Stützelementen eine mittels einer sich an dem jeweiligen Gleiter 8 abstützenden Rastfeder 20 vorgespannte Rastkugel 21 vorgesehen ist. Diese Rastkugel 20 rastet in einer oder mehreren voneinander in der Auszugrichtung 10 beabstandeten Rastvertiefungen 35, die in die Laufflächen 34 des Schienenelements 30 eingedrückt sind, ein. Die Rastvertiefungen 35 sind gut in der Schnittansicht aus Figur 11 sowie der isometrischen Ansicht aus Figur 12 der Linearführung 31 dieser Ausführungsform erkennbar. Die Rastfeder 20 ist koaxial und konzentrisch zu der Spiralfeder 13 der Gleiter 8 angeordnet. Diese Ausgestaltung ermöglicht es, nicht nur das Paar von Gleitern 8 mittig, d.h. bezogen auf die Auszugsrichtung 10 symmetrisch am Grundkörper 2, aufzunehmen, sondern gleichzeitig auch die Rastkugel 21 symmetrisch bezogen auf die Auszugsrichtung 10 am Grundkörper 2 zu montieren.

In den Ausführungsformen der Figuren 9 bis 12 und 13 hat die Rastkugel 21 einen deutlich kleineren Durchmesser als die Lagerkugeln 19. Auf diese Weise rollen die Lagerkugeln 19 über die in den Laufflächen 34 des Schienenelements 30 vorgesehenen Rastvertiefungen 35 hinweg, ohne dass der Benutzer dies als übermäßig störend oder eine Verrastung empfindet. Die Rastvertiefungen sind vielmehr an den Durchmesser der Rastkugel 21 angepasst, so dass diese in die Rastvertiefungen 35 fallen.

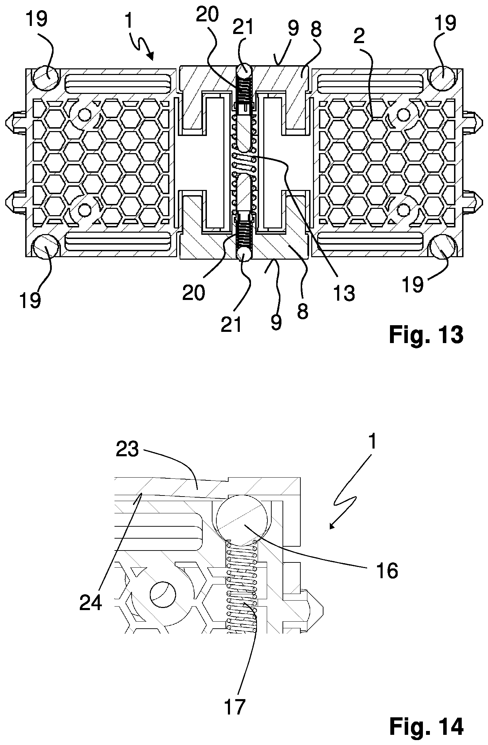

Figur 13 zeigt eine Realisierung einer Rastfunktion durch Integration einer Rastkugel 20 in ein erstes Paar von Gleitern 8, wobei jedoch der Schlitten 1 ohne zusätzliche Stützelemente in Form von auf die Laufflächen 34 des Schienenelements 30 vorgespannten Kugeln (wie in den Ausführungsformen der Figuren 1 bis 4 sowie 9 bis 12) oder in Form eines zweiten Paars von Gleitern 8 (wie in der Ausführungsform der Figuren 5 bis 8) auskommt. Die dargestellten Kugeln 19 sind nicht federnd auf die Laufflächen 24 vorgespannt so wie dies für die Ausführungsform aus Figuren 5 bis 8 zuvor beschrieben wurde. Die Integration der Rastkugel 21 in den Gleiter 8 ist die gleiche wie anhand der Figuren 9 bis 12 gezeigt und beschrieben.

Figur 14 zeigt eine alternative Realisierung einer Rastfunktion an dem Schlitten 1 aus den Figuren 1 bis 4. Figur 14 ist eine vergrößerte, teilweise weggebrochene Ansicht der Lagerkugel 16 des dritten Paars 7 von Stützelementen der Ausführungsform aus den Figuren 1 bis 4, wobei an dem Schienenelement 22 ein entsprechender Rastvorsprung 23 auf der Lauffläche 24 eingeprägt ist. Auch auf diese Weise kann eine Rastfunktion bereitgestellt werden.

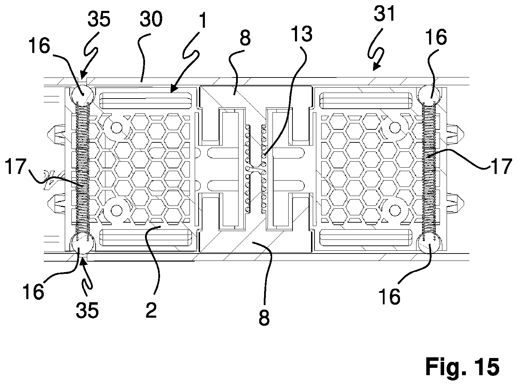

Figur 15 zeigt den Schlittens 1 aus den Figuren 1 bis 4 in einer Linearführung 31 mit einem Schienenelement 30, welches in den Schenkeln 33 und damit in den Laufflächen 34 Durchbrechungen als Rastvertiefungen 35 aufweist. Die Rastvertiefungen 35 sind derart ausgestaltet, dass die Lagerkugeln 16 des zweiten und des dritten Paars von Stützelementen 6, 7 in diesen Rastvertiefungen 35 einrasten können, so wie dies in Figur 15 gezeigt ist. In einer solchen Ausführungsform einer Linearführung wird die Vorspannung der Lagerkugeln 16 des zweiten und des dritten Paars von Stützelementen 6, 7 gleichzeitig auch zum Bereitstellen der Rastfunktion genutzt.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellung und Beschreibung lediglich beispielhaft und nicht als Beschränkung des Schutzbereichs gedacht, so wie er durch die Ansprüche definiert wird. Die Erfindung ist nicht auf die offenbarten Ausführungsformen beschränkt.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus, und der unbestimmte Artikel "eine" oder "ein" schließt eine Mehrzahl nicht aus. Die bloße Tatsache, dass bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht.

### Bezugszeichenliste

- 1: Schlitten
- 2: Grundkörper
- 3: Führungsfläche
- 4: Innengewinde
- 5: erstes Paar von Stützelementen
- 6: zweites Paar von Stützelementen
- 7: drittes Paar von Stützelementen
- 8: Gleiter
- 9: Gleitfläche
- 10: Auszugsrichtung
- 11: Oberfläche
- 12: Hochrichtung
- 13: Spiralfeder (erstes Stützfederelement)
- 14: Lagerfläche
- 15: Führungsstift
- 16: Lagerkugel
- 17: Spiralfeder (zweites und drittes Stützfederelement)
- 18: Spiralfeder (zweites Stützfederelement)
- 19: Lagerkugeln
- 20: Rastfeder
- 21: Rastkugel
- 22: Schienenelement
- 23: Rastvorsprung
- 24: Lauffläche
- 30: Schienenelement
- 31: Linearführung
- 32: Schienenrücken
- 33: Schenkel
- 34: Lauffläche
- 35: Rastvertiefung

## Patentansprüche

1. Schlitten (1) für ein lineares Führungssystem (31), das ein Schienenelement (22) mit zwei zueinander hin zeigenden Laufflächen und den relativ gegenüber dem Schienenelement (22) in und entgegen einer Auszugsrichtung (10) beweglichen Schlitten (1) umfasst, wobei der Schlitten (1)
einen Grundkörper (2),
ein erstes Paar (5) von Stützelementen in Form von Gleitern (8) und
mindestens ein erstes Stützfederelement (13) aufweist,
wobei jeder der Gleiter (8) aus dem ersten Paar (5) von Stützelementen in einer Hochrichtung (12) senkrecht zu der Auszugsrichtung (10) beweglich an dem Grundkörper (2) gelagert ist, so dass jeder der Gleiter (8) mit jeweils einer der Laufflächen in Reibeingriff bringbar ist, und
wobei das mindestens eine erste Stützfederelement (13) derart an dem Grundkörper (2) gelagert ist, dass das mindestens eine erste Stützfederelement (13) die Gleiter (8) des ersten Paars von Stützelementen in der Hochrichtung (12) voneinander weg vorspannt,
**dadurch gekennzeichnet, dass** der Schlitten zusätzlich
ein zweites Paar (6) von Stützelementen und
mindestens ein zweites Stützfederelement (17, 18) aufweist,
wobei das zweite Paar (6) von Stützelementen (8, 16) in der Auszugsrichtung (10) von dem ersten Paar (5) von Stützelementen beabstandet angeordnet ist, wobei jedes der Stützelemente (8, 16) aus dem zweiten Paar (6) von Stützelementen (8, 16) in der Hochrichtung (12) beweglich an dem Grundkörper (2) gelagert ist, so dass jedes der Stützelemente (8, 16) mit jeweils einer der Laufflächen in Eingriff bringbar ist, und
wobei das mindestens eine zweite Stützfederelement (17, 18) derart an dem Grundkörper (2) gelagert ist, dass das mindestens eine zweite Stützfederelement (17, 18) die Stützelemente (8, 16) des zweiten Paars (5) von Stützelementen (8, 16) in der Hochrichtung (12) voneinander weg vorspannt.

2. Schlitten (1) nach dem vorhergehenden Anspruch, wobei der Schlitten (1)
ein drittes Paar (7) von Stützelementen (16) und
mindestens ein drittes Stützfederelement (17) aufweist,
wobei die Stützelemente (16) des zweiten Paars (6) von Stützelementen (16) in der Auszugsrichtung (10) vor den Gleitern (8) des ersten Paars (5) von Stützelementen angeordnet sind,
wobei die Stützelemente (16) des dritten Paars (7) von Stützelementen (16) in der Auszugsrichtung (10) hinter den Gleitern (8) des ersten Paars (5) von Stützelementen angeordnet sind,
wobei jedes der Stützelemente (16) aus dem dritten Paar (7) von Stützelementen (16) in der Hochrichtung (12) beweglich an dem Grundkörper (2) gelagert ist, so dass jedes der Stützelemente (16) mit jeweils einer der Laufflächen in Eingriff bringbar ist, und
wobei das mindestens eine dritte Stützfederelement (17) derart an dem Grundkörper (2) gelagert ist, dass das mindestens eine dritte Stützfederelement (17) die Stützelemente (16) des dritten Paars (7) von Stützelementen (16) in der Hochrichtung (12) voneinander weg vorspannt.

3. Schlitten (1) nach dem vorhergehenden Anspruch, wobei zumindest die Stützelemente (16) des zweiten Paars (6) von Stützelementen (16) oder des dritten Paars (7) von Stützelementen Wälzkörper (16) sind, oder wobei zumindest die Stützelemente des zweiten Paars (6) von Stützelementen oder des dritten Paars (7) von Stützelementen Gleiter (8) sind, wobei die Gleiter (8) des ersten Paars (5) von Stützelementen eine erste Erstreckung in der Auszugsrichtung (10) aufweisen, die Gleiter des zweiten Paars (6) von Stützelementen eine zweite Erstreckung in der Auszugsrichtung (10) aufweisen und die Gleiter des dritten Paars (7) von Stützelementen eine dritte Erstreckung in der Auszugsrichtung (10) aufweisen, wobei die zweite Erstreckung und die dritte Erstreckung kleiner sind als die erste Erstreckung.

4. Schlitten (1) nach Anspruch 2 oder 3, wobei die Stützelemente (16) des zweiten und des dritten Paars (6, 7) von Stützelementen (16) den gleichen Abstand in der Auszugrichtung (10) von den Gleitern (8) des ersten Paars (5) von Stützelementen aufweisen.

5. Schlitten (1) nach einem der Ansprüche 2 bis 4, wobei an dem Grundkörper (2) für den jedes der Stützelemente (16) des zweiten Paars (6) von Stützelementen und des dritten Paars (7) von Stützelementen ein Anschlag vorgesehen ist, der einen Federweg der Stützelemente (16) in einer Richtung senkrecht zu der Auszugsrichtung (10) und entgegen einer Federkraft des zweiten und des dritten Stützfederelements (17) begrenzt.

6. Schlitten (1) nach Anspruch 1, wobei die Stützelemente des zweiten Paars (6) von Stützelementen Gleiter (8) sind.

7. Schlitten (1) nach dem vorhergehenden Anspruch, wobei jeder der Gleiter (8) zumindest des ersten Paars (5) von Stützelementen oder der zweiten Paars (6) von Stützelementen einen T-förmigen Abschnitt aufweist, wobei ein Querbalken des T-förmigen Abschnitts mit einer Lauffläche des Schienenelements (22) in Reibeingriff bringbar ist und ein vertikaler Balken das zumindest eine erste oder zweite Stützfederelement (13, 18) aufnimmt.

8. Schlitten (1) nach Anspruch 6 oder 7, wobei jeder der Gleiter (8) zumindest des ersten Paars (5) von Stützelementen oder der zweiten Paars (6) von Stützelementen mindestens einen, vorzugsweise zylindrischen, Führungsstift (15) aufweist, wobei der Führungsstift (15) in jeweils eine, vorzugsweise hohlzylindrische, Führungsbuchse in dem Grundkörper (2) eingreift, so dass jeder der Gleiter (8) eine Führung in der Auszugsrichtung (10) erfährt, während er in der Hochrichtung (12) schwimmend gelagert ist.

9. Schlitten (1) nach einem Ansprüche 6 bis 8, wobei
der Schlitten (1) eine Mehrzahl von Wälzkörpern (19) aufweist,
wobei die Mehrzahl von Wälzkörpern (19) derart an dem Grundkörper (2) aufgenommenen ist, dass die Mehrzahl von Wälzkörpern (19) zumindest auf den zwei Laufflächen abrollbar sind oder gegenüber den zwei Laufflächen eine Gleitbewegung ausführen und dass die Mehrzahl von Wälzkörpern (19) in der Auszugsrichtung (10) von dem ersten und dem zweiten Paar (5, 6) von Stützelementen (8) beabstandet ist, und
wobei der Grundkörper (2) eine Position eines jeden aus der Mehrzahl von Wälzkörpern (19) in der Auszugsrichtung (10) relativ zu dem Grundkörper (2) festlegt.

10. Schlitten (1) nach einem der vorhergehenden Ansprüche, wobei an dem Grundkörper (2) zusätzlich ein Rastkörper (21) und eine Rastfeder (20) vorgesehen ist, wobei die Rastfeder (20) den Rastkörper (21) in einer Richtung senkrecht zu der Auszugsrichtung (10) und in der Hochrichtung (12) oder senkrecht zu der Hochrichtung (12) vorspannt.

11. Schlitten (1) nach dem vorhergehenden Anspruch, wobei sich die Rastfeder (20) an einem Gleiter (8) des ersten Paars (5) von Stützelementen abstützt.

12. Schlitten (1) nach einem der vorhergehenden Ansprüche, wobei der Schlitten zumindest genau ein erstes Stützfederelement (13) oder genau ein zweites Stützfederelement (17, 18) oder genau ein drittes Stützfederelement (17) aufweist.

13. Schlitten (1) nach dem vorhergehenden Anspruch, wobei zumindest das erste Stützfederelement (13) oder das zweite Stützfederelement (17, 18) oder das dritte Stützfederelement (18) in der Hochrichtung (12) schwimmend an dem Grundkörper (2) gelagert ist.

14. Schlitten (1) nach einem der vorhergehenden Ansprüche, wobei zumindest das erste Stützfederelement (13) oder das zweite Stützfederelement (17, 18) oder das dritte Stützfederelement (17) eine Spiralfeder ist.

15. Lineares Führungssystem (31) mit
einem Schienenelement (2), das zwei zueinander hin zeigenden Laufflächen (24) aufweist, und
einem Schlitten (1) nach einem der vorhergehenden Ansprüche,
wobei der Schlitten (1) und das Schienenelement (2) in und entgegen der Auszugsrichtung (10) linear gegeneinander verschiebbar sind,
wobei jeder der Gleiter (8) des ersten Paars (5) von Stützelementen mit jeweils einer der Laufflächen (24) in Reibeingriff ist und
wobei jedes der Stützelemente (8, 16) des zweiten Paars (6) von Stützelementen mit jeweils einer der Laufflächen (24) in Eingriff ist.

## Claims

1. A carriage (1) for a linear guide system (31) comprising a rail element (22) with two running surfaces facing each other and the carriage (1) movable relative to the rail element (22) in and against a pull-out direction (10), wherein the carriage (1) comprises
a base body (2),
a first pair (5) of support elements in the form of sliders (8), and
at least one first support spring element (13),
wherein each of the sliders (8) of the first pair (5) of support elements is movably mounted on the base body (2) in an upward direction (12) perpendicular to the pull-out direction (10), so that each of the sliders (8) is frictionally engageable with a respective one of the running surfaces, and
wherein the at least one first support spring element (13) is mounted on the base body (2) such that the at least one first support spring element (13) biases the sliders (8) of the first pair of support elements away from each other in the upward direction (12),
**characterised in that** the carriage additionally comprises
a second pair (6) of support elements and
at least one second support spring element (17, 18),
wherein the second pair (6) of support elements (8, 16) is spaced apart from the first pair (5) of support elements in the pull-out direction (10),
wherein each of the support elements (8, 16) of the second pair (6) of support elements (8, 16) is movably supported on the base body (2) in the upward direction (12) so that each of the support elements (8, 16) is engageable with a respective one of the running surfaces, and
wherein the at least one second support spring element (17, 18) is mounted on the base body (2) such that the at least one second support spring element (17, 18) biases the support elements (8, 16) of the second pair (5) of support elements (8, 16) away from each other in the upward direction (12).

2. The carriage (1) according to the preceding claim, wherein the carriage (1) comprises
a third pair (7) of support elements (16) and
at least one third support spring element (17),
wherein the support elements (16) of the second pair (6) of support elements (16) are arranged in front of the sliders (8) of the first pair (5) of support elements in the pull-out direction (10),
wherein the support elements (16) of the third pair (7) of support elements (16) are arranged behind the sliders (8) of the first pair (5) of support elements in the pull-out direction (10),
wherein each of the support elements (16) of the third pair (7) of support elements (16) is movably supported on the base body (2) in the upward direction (12) so that each of the support elements (16) is engageable with a respective one of the running surfaces, and
wherein the at least one third support spring element (17) is mounted on the base body (2) such that the at least one third support spring element (17) biases the support elements (16) of the third pair (7) of support elements (16) away from each other in the upward direction (12).

3. The carriage (1) according to the preceding claim, wherein at least the support elements (16) of the second pair (6) of support elements (16) or of the third pair (7) of support elements are rolling elements (16), or wherein at least the support elements of the second pair (6) of support elements or of the third pair (7) of support elements are sliders (8), wherein the sliders (8) of the first pair (5) of support elements comprise a first extension in the pull-out direction (10), the sliders of the second pair (6) of support elements comprise a second extension in the pull-out direction (10) and the sliders of the third pair (7) of support elements comprise a third extension in the pull-out direction (10), wherein the second extension and the third extension are smaller than the first extension.

4. The carriage (1) according to claim 2 or 3, wherein the support elements (16) of the second and of the third pair (6, 7) of support elements (16) have the same distance in the extension direction (10) from the sliders (8) of the first pair (5) of support elements.

5. The carriage (1) according to any one of claims 2 to 4, wherein a stop is provided on the base body (2) for each of the support elements (16) of the second pair (6) of support elements and of the third pair (7) of support elements, which stop limits a spring travel of the support elements (16) in a direction perpendicular to the pull-out direction (10) and against a spring force of the second and of the third support spring elements (17).

6. The carriage (1) according to claim 1, wherein the support elements of the second pair (6) of support elements are sliders (8).

7. The carriage (1) according to the preceding claim, wherein each of the sliders (8) of at least one of the first pair (5) of support elements and the second pair (6) of support elements comprises a T-shaped portion, wherein a transverse beam of the T-shaped portion is frictionally engageable with a running surface of the rail element (22) and a vertical beam receives the at least one first or second support spring element (13, 18).

8. The carriage (1) according to claim 6 or 7, wherein each of the sliders (8) of at least the first pair (5) of support elements or the second pair (6) of support elements comprises at least one, preferably cylindrical, guide pin (15), wherein the guide pin (15) engages in a respective, preferably hollow-cylindrical, guide bush in the base body (2), so that each of the sliders (8) is guided in the pull-out direction (10) while it is floating in the upward direction (12).

9. The carriage (1) according to any one of claims 6 to 8, wherein
the carriage (1) comprises a plurality of rolling elements (19),
wherein the plurality of rolling elements (19) is accommodated on the base body (2) in such a way that the plurality of rolling elements (19) can roll at least on the two running surfaces or perform a sliding movement relative to the two running surfaces, and in such a way that the plurality of rolling elements (19) is spaced apart in the pull-out direction (10) from the first and the second pair (5, 6) of support elements (8), and
wherein the base body (2) defines a position of each of the plurality of rolling elements (19) in the pull-out direction (10) relative to the base body (2).

10. The carriage (1) according to any one of the preceding claims, wherein a detent body (21) and a detent spring (20) are additionally provided on the base body (2), wherein the detent spring (20) biases the detent body (21) in a direction perpendicular to the pull-out direction (10) and in the upward direction (12) or perpendicular to the upward direction (12).

11. The carriage (1) according to the preceding claim, wherein the detent spring (20) is supported on a slider (8) of the first pair (5) of support elements.

12. The carriage (1) according to any one of the preceding claims, wherein the carriage comprises at least exactly one first support spring element (13) or exactly one second support spring element (17, 18) or exactly one third support spring element (17).

13. The carriage (1) according to the preceding claim, wherein at least the first support spring element (13) or the second support spring element (17, 18) or the third support spring element (18) is mounted in a floating manner on the base body (2) in the upward direction (12).

14. The carriage (1) according to any one of the preceding claims, wherein at least the first support spring element (13) or the second support spring element (17, 18) or the third support spring element (17) is a spiral spring.

15. A linear guide system (31) comprising
a rail element (2), which rail element (2) comprises two running surfaces (24) facing each other, and
a carriage (1) according to any one of the preceding claims,
wherein the carriage (1) and the rail element (2) are linearly displaceable relative to each other in and against the pull-out direction (10),
wherein each of the sliders (8) of the first pair (5) of support elements is frictionally engaged with a respective one of the running surfaces (24), and
wherein each of the support elements (8, 16) of the second pair (6) of support elements is engaged with a respective one of the running surfaces (24).

## Revendications

1. Chariot (1) pour un système de guidage linéaire (31) qui comprend un élément de rail (22) avec deux surfaces de roulement orientées l'une vers l'autre et le chariot (1) pouvant être déplacé par rapport à l'élément de rail (22) dans et à l'encontre d'une direction d'extraction (10), le chariot (1) comprenant
un corps de base (2),
une première paire (5) d'éléments de support sous la forme de patins (8) et
au moins un premier élément de support à ressort (13),
chacun des patins (8) de la première paire (5) d'éléments de support étant monté mobile dans une direction de la hauteur (12) perpendiculairement à la direction d'extraction (10), de façon que chacun des patins (8) puisse être mis en prise par frottement avec une des surfaces de roulement respective, et
ledit premier élément de support à ressort (13) étant monté sur le corps de base (2) de façon que ledit au moins un premier élément de support à ressort (13) exerce une précontrainte sur les patins (8) de la première paire d'éléments de support qui tend à les éloigner l'un de l'autre dans la direction de la hauteur (12),
**caractérisé en ce que** le chariot comprend en outre
une deuxième paire (6) d'éléments de support et
au moins un deuxième élément de support à ressort (17, 18),
la deuxième paire (6) d'éléments de support (8, 16) étant disposée à une distance, dans la direction d'extraction (10), de la première paire (5) d'éléments de support, chacun des éléments de support (8, 16) de la deuxième paire (6) d'éléments de support (8, 16) étant disposé sur le corps de base (2) de façon mobile dans la direction de la hauteur (12), si bien que chacun des éléments de support (8, 16) puisse être mis en prise avec une des surfaces de roulement respective, et
ledit au moins un deuxième élément de support à ressort (17, 18) étant disposé sur le corps de base (2) de façon que ledit au moins un deuxième élément de support à ressort (17, 18) exerce une précontrainte dans la direction de la hauteur (12) sur les éléments de support (8, 16) de la deuxième paire (5) d'éléments de support qui tend à les éloigner l'un de l'autre dans la direction de la hauteur (12).

2. Chariot (1) selon la revendication précédente, le chariot (1) comprenant
une troisième paire (7) d'éléments de support (16) et
au moins un troisième élément de support à ressort (17),
les éléments de support (16) de la deuxième paire (6) d'éléments de support (16) étant disposés, dans la direction d'extraction (10), avant les patins (8) de la première paire (5) d'éléments de support,
les éléments de support (16) de la troisième paire (7) d'éléments de support (16) étant disposés, dans la direction d'extraction (10), derrière les patins (8) de la première paire (5) d'éléments de support,
chacun des éléments de support (16) de la troisième paire (7) d'éléments de support (16) étant monté mobile, dans la direction de la hauteur (12), sur le corps de base (2), si bien que chacun des éléments de support (16) puisse être mis en prise avec une surface de roulement respective, et
ledit au moins un troisième élément de support à ressort (17) étant monté sur le corps de base (2) de façon telle que ledit au moins un troisième élément de support à ressort (17) exerce une précontrainte sur les éléments de support (16) de la troisième paire (7) d'éléments de support (16) qui tend à les éloigner l'un de l'autre dans la direction de la hauteur (12).

3. Chariot (1) selon la revendication précédente, au moins les éléments de support (16) de la deuxième paire (6) d'éléments de support (16) ou de la troisième paire (7) d'éléments de support étant des corps roulants (16), ou au moins les éléments de support de la deuxième paire (6) d'éléments de support ou de la troisième paire (7) d'éléments de support étant des patins (8), les patins (8) de la première paire (5) d'éléments de support ayant une première étendue dans la direction d'extraction (10), les patins de la deuxième paire (6) d'éléments de support ayant une deuxième étendue dans la direction d'extraction (10) et les patins de la troisième paire (7) d'éléments de support ayant une troisième étendue dans la direction d'extraction (10), la deuxième étendue et la troisième étendue étant inférieure à la première étendue.

4. Chariot (1) selon la revendication 2 ou 3, les éléments de support (16) des deuxième et troisième paires (6, 7) d'éléments de support (16) étant à égale distance, dans la direction d'extraction (10), des patins (8) de la première paire (5) d'éléments de support.

5. Chariot (1) selon l'une des revendications 2 à 4, pour chacun des éléments de support (16) de la deuxième paire (6) d'éléments de support et de la troisième paire (7) d'éléments de support, une butée étant prévue qui délimite un débattement des éléments de support (16) dans une direction perpendiculaire à la direction d'extraction (10) et à l'encontre d'un effort élastique des deuxième et troisième éléments de support à ressort (17) .

6. Chariot (1) selon la revendication 1, les éléments de support de la deuxième paire (6) d'éléments de support étant des patins (8).

7. Chariot (1) selon la revendication précédente, chacun des patins (8) d'au moins de la première paire (5) d'éléments de support ou de la deuxième paire (6) d'éléments de support comprenant une partie en forme d'un T, une barre transversale de la partie en forme d'un T pouvant être mise en prise par frottement avec une surface de roulement de l'élément de rail (22) et une barre verticale recevant au moins le premier ou le deuxième élément de support à ressort (13, 18).

8. Chariot (1) selon la revendication 6 ou 7, chacun des patins (8) d'au moins de la première paire (5) d'éléments de support ou de la deuxième paire (6) d'éléments de support comprenant au moins une broche de guidage (15), de préférence cylindrique, la broche de guidage (15) s'engageant dans une douille de guidage respective, de préférence cylindrique creuse, dans le corps de base (2), si bien que chacun des patins (8) est guidé dans la direction d'extraction (10) alors qu'il est monté de façon flottante dans la direction de la hauteur (12).

9. Chariot (1) selon l'une des revendications 6 à 8,
le chariot (1) comprenant une pluralité de corps roulants (19),
la pluralité de corps roulants (19) étant disposée au corps de base (2) de telle manière que la pluralité de corps roulants (19) puisse se dérouler au moins sur les deux surfaces de roulement ou puisse effectuer un mouvement de glissement par rapport aux deux surfaces de roulement et que la pluralité de corps roulants (19) soit espacée, dans la direction d'extraction (10), des première et deuxième paires (5, 6) d'éléments de support (8), et
le corps de base (2) définissant une position, dans la direction d'extraction (10), de chacun parmi la pluralité de corps roulants (19) par rapport au corps de base (2).

10. Chariot (1) selon l'une des revendications précédentes, un corps d'arrêt (21) et un ressort d'arrêt (20) étant prévus, de manière supplémentaire, au corps de base (2), le ressort d'arrêt (20) exerçant une précontrainte sur le corps d'arrêt (21) dans une direction perpendiculaire à la direction d'extraction (10) et dans la direction de la hauteur (12) ou perpendiculairement à la direction de la hauteur (12).

11. Chariot (1) selon la revendication précédente, le ressort d'arrêt (20) s'appuyant sur un patin (8) de la première paire (5) d'éléments de support.

12. Chariot (1) selon l'une des revendications précédentes, le chariot comprenant au moins précisément un premier élément de support à ressort (13) ou précisément un deuxième élément de support à ressort (17, 18) ou précisément un troisième élément de support à ressort (17).

13. Chariot (1) selon la revendication précédente, au moins le premier élément de support à ressort (13) ou le deuxième élément de support à ressort (17, 18) ou le troisième élément de support à ressort (18) étant monté de façon flottante sur le corps de base (2).

14. Chariot (1) selon l'une des revendications précédentes, au moins le premier élément de support à ressort (13) ou le deuxième élément de support à ressort (17, 18) ou le troisième élément de support à ressort (17) étant un ressort hélicoïdal.

15. Système de guidage linéaire (31) comprenant
un élément de rail (2) comportant deux surfaces de roulement (24) orientées l'une vers l'autre et
un chariot (1) selon l'une des revendications précédentes,
le chariot (1) et l'élément de rail (2) pouvant être coulissés linéairement l'un par rapport l'autre dans la direction d'extraction et dans le sens inverse,
chacun des patins (8) de la première paire (5) d'éléments de support étant en prise par frottement avec une des surfaces de roulement (24) et
chacun des éléments de support (8, 16) de la deuxième paire (6) d'éléments de support étant en prise avec une des surfaces de roulement (24) respective.
